(19) Europäisches Patentamt
European Patent Office
Office européen des brevets

(11) **EP 3 783 218 B1**

(12) **EUROPÄISCHE PATENTSCHRIFT**

(45) Veröffentlichungstag und Bekanntmachung des Hinweises auf die Patenterteilung:
**28.01.2026  Patentblatt 2026/05**

(21) Anmeldenummer: **20187579.6**

(22) Anmeldetag: **24.07.2020**

(51) Internationale Patentklassifikation (IPC):
**F02D 41/00** (2006.01)   **F02D 41/12** (2006.01)

(52) Gemeinsame Patentklassifikation (CPC):
**F02D 41/0087; F02D 41/123;** F02D 41/1448;
F02D 2041/001; F02D 2041/0015; F02D 2200/0402;
F02D 2200/0406; Y02T 10/40

(54) **VERFAHREN ZUR BESTIMMUNG DER ZYLINDERLUFTFÜLLUNG EINES VERBRENNUNGSMOTORS IM UNBEFEUERTEN BETRIEB**

METHOD FOR DETERMINING THE CYLINDER AIR CHARGE OF A COMBUSTION ENGINE IN UNFIRED OPERATION

PROCÉDÉ DE DÉTERMINATION DU REMPLISSAGE EN AIR DU CYLINDRE D'UN MOTEUR À COMBUSTION INTERNE LORS DU FONCTIONNEMENT HORS SOUMISSION À LA FLAMME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.08.2019   DE 102019212565**

(43) Veröffentlichungstag der Anmeldung:
**24.02.2021   Patentblatt 2021/08**

(73) Patentinhaber: **VOLKSWAGEN AG**
**38440 Wolfsburg (DE)**

(72) Erfinder:
• **Vogelsang, Jan**
**38106 Braunschweig (DE)**

• **Viereg, Tobias**
**38527 Meine (DE)**
• **Piorun, Marcin**
**38448 Wolfsburg (DE)**
• **Shurkewitsch, Andre**
**38547 Calberlah (DE)**
• **Sternberg, Heiko**
**38440 Wolfsburg (DE)**
• **Zimbalist, Nikolaus**
**31234 Edemissen (DE)**

(56) Entgegenhaltungen:
**EP-A1- 3 282 114**     **DE-A1- 10 158 262**
**US-A1- 2003 220 732**   **US-A1- 2014 069 377**

**Beschreibung**

Die vorliegende Erfindung betrifft ein Verfahren zur Bestimmung der Zylinderluftfüllung eines Verbrennungsmotors im unbefeuerten Betrieb mit den Merkmalen des Oberbegriffs des Patentanspruchs 1.

Ein unbefeuerter Betrieb von Zylindern eines Verbrennungsmotors tritt insbesondere bei Schubbetrieb aber auch bei einer Zylinderabschaltung auf. Die Zylinderabschaltung bei Verbrennungsmotoren bietet die Möglichkeit durch reduzierte Wandwärme- und Ladungswechselverluste die Effizienz von Verbrennungskraftmaschinen zu steigern. Dabei ist von besonderem Vorteil, dass durch die Zylinderabschaltung der Abgasmassenstrom reduziert und die Abgastemperatur erhöht wird, was sich positiv auf das Warmhalten der Abgasnachbehandlung auswirkt. So können hohe Abgasnachbehandlung -Wirkungsgrade erzielt werden.

Die heutigen Abgasgesetzgebungen erfordern eine immer genauere Modellierung der Zylinderluftfüllung. Die individuelle Menge der Zylinderluftfüllung ist einer der wesentlichen Parameter, die in die Steuerung moderner Verbrennungsmotoren einfließt, um eine möglichst effiziente und Abgas-optimierte Betriebsweise sicher zu stellen. Alle bisher bekannten Verfahren zur Bestimmung der Zylinderluftfüllung sehen jedoch nur den befeuerten Betrieb vor, bei dem Kraftstoff in den Zylinder eingebracht wird, so dass das Luft-Kraftstoff-Gemisch anschließend zur Verbrennung gebracht werden kann.

So beschreibt beispielsweise DE 101 58 262 A1 ein gattungsgemäßes Verfahren zur Bestimmung einer Vielzahl von Parametern mittels geeigneter Modelle, die in die Steuerung des Verbrennungsmotors eingebracht werden und diese überwachen und optimieren. Insbesondere wird auch hier die Befüllung des Brennraums des Verbrennungsmotors mit dem zugeführten Gasgemisch aus Frischluft und rückgeführtem Abgas mittels eines physikalisch basierten Modells nachgebildet.

Die DE 103 62 028 B4 beschreibt ebenfalls ein Verfahren zur Bestimmung einer Frischgasmenge unter Berücksichtigung einer Abgasrückführmenge, welche eine temperaturbasierte Korrektur einschließt.

In einem anderen Modell-basierten Verfahren wird gemäß der EP 2 098 710 B1 die Sauerstoffkonzentration in einer Brennkraftmaschine mit Abgasrückführung geschätzt, wobei als einer der wesentlichen Parameter die Luftmasse, die in die Zylinder eintritt, und die Schätzung des Gesamtgasstroms, der in die Zylinder eintritt, herangezogen werden.

Beim unbefeuerten Betrieb, der hauptsächlich in Schubphasen und insbesondere bei der entsprechenden Zylinderabschaltung auftritt, findet der Ladungswechsel in den Zylindern ohne das Einbringen von Kraftstoff und damit auch ohne anschließende Verbrennung statt. Durch die fehlende Verbrennung stellt sich eine andere Luftfüllung im Zylinder ein als im befeuerten Betrieb bei sonst analogen Bedingungen. Da bisherige Modelle für die Zylinderluft-füllung nur den befeuerten Betrieb modellieren, geben diese Modelle im unbefeuerten Betrieb nicht die korrekte Zylinderluftfüllung wieder. Dieser Modellfehler wird zudem an nachgelagerte Systeme im Motorsteuergerät weitergegeben. Es konnte gefunden werden, dass dies zu einer Abweichung der Modellwerte zu den tatsächlichen Werten von bis zu 30% führen kann.

Aus der EP 3 282 114 A1 ist ein Motorsteuergerät und ein Motorsteuerungsverfahren bekannt. Ein zugehöriger Verbrennungsmotor weist eine Drosselklappe, eine Zündkerze und einen Zylinder mit einem Einlass- und einem Auslassventil auf. Das Motorsteuerungsverfahren beinhaltet das Abschalten von Zylindern, d.h. dass in dem entsprechenden Zylinder während seiner Abschaltung, z.B. im Schubbetrieb des Verbrennungsmotors, keine Verbrennung erfolgt und auch kein Kraftstoff eingespritzt wird. Das Verfahren beinhaltet eine Bestimmung einer Restluftmenge, welche nach einer Verbrennung in einer Brennkammer des Zylinders verbleibt. Diese Restluftmenge nimmt direkt Einfluss auf die gesamte Zylinderluftfüllung. Weiterhin wird diese Restluftmenge auch während der Abschaltung des Zylinders berechnet. Die Restluftmenge wird während der Abschaltung schrittweise, d.h. bei einem jeden Ladungswechsel erhöht. Diese schrittweise Änderung der Restluftmenge wird in der Berechnung mit abgebildet. Dazu wird ein Faktor KLRES schrittweise vergrößert. Der Parameter "KLRES" wird als "remaining load factor," / "verbleibender Lastfaktor" bezeichnet. Es handelt sich um einen Faktor, der den verbleibenden Luftanteil im Zylinder während des Verbrennungsprozesses in einem Verbrennungsmotor repräsentiert. Der "remaining load factor" wird während des Betriebs des Motors berechnet und berücksichtigt den Einfluss von nicht ausgestoßener Luft aus vorherigen Zyklen, insbesondere während des Kraftstoffabschaltens und Wiederinjizierens. Er ist abhängig von einer Einlassluftmenge, einer Drehzahl und der Stellung der Drosselklappe (vgl. [0034]). Bei einem erneuten Zuschalten des Zylinders wird eine Kraftstoffmenge unter Berücksichtigung der, gegenüber dem befeuerten Betrieb vergrößerten Restluftmenge berechnet. So wird vermieden, dass bei einer ersten Verbrennung nach einer Phase der Abschaltung ein zu mageres Gemisch in der Brennkammer vorhanden ist.

Es wird die Berechnung von "KLRES" durch eine erste Gleichung beschrieben:

$$KLRES_i = KLRMX \times (KLNEW + KLRES_{i-1})/(KLNEW + KLRMX)$$

Hierbei bedeuten die Variablen:

KLRESi:         Der verbleibende Lastfaktor nach der Aktualisierung (Residual Load Factor after Renewal).

KLRMX: Der maximale verbleibende Lastfaktor, der den Lastfaktor darstellt, wenn alle verbleibenden Gase durch Luft ersetzt werden (Maximum Residual Load Factor).

KLNEW: Der vorhergesagte Lastfaktor, der auf Basis von verschiedenen Parametern, wie der Luftmenge, dem Motordrehzahl und dem Öffnungsgrad der Drosselklappe, berechnet wird (Predicted Load Factor).

KLRESi-1: Der verbleibende Lastfaktor vor der Aktualisierung (Residual Load Factor before Renewal).

Der maximale verbleibende Lastfaktor (KLRMX) wird durch eine zweite Gleichung berechnet:

$$KLRMX = 1/(\epsilon - 1) \times Pa/P0$$

Hierbei bedeuten die Symbole:

$\epsilon$: Das Verdichtungsverhältnis des Motors.
Pa: Der aktuelle atmosphärische Druck.
P0: Der Standardatmosphärendruck.

Zusammenfassend repräsentiert "KLRES" also den verbleibenden Lastfaktor, der den Einfluss von nicht ausgestoßener Luft aus vorherigen Zyklen während des Motorbetriebs berücksichtigt. Wie in den Figuren gezeigt ist, steigt der Wert für KLRES mit weiteren Arbeitsspielen an.

Für die Einhaltung der gesetzlichen Grenzwerte für die Abgasemissionen werden jedoch genaue Modelle für die Gas- und Bauteiltemperaturen im Abgassystem benötigt. Für die Modellierung dieser Temperaturen bildet der Massenstrom durch die Zylinder, der wesentlich von der Zylinderluftfüllung bestimmt wird, eine Haupteinflussgröße, so dass Ungenauigkeiten bei der Bestimmung der Zylinderluftfüllung zu Ungenauigkeiten bei der Bestimmung dieser Temperaturen führen.

Aufgabe der vorliegenden Erfindung ist es daher, ein Verfahren zur Bestimmung der Zylinderluftfüllung zur Verfügung zu stellen und zu verbessern, durch welches auch der Betrieb von Zylindern im unbefeuerten Zustand nachgebildet werden kann. Hierbei sollte bevorzugt eine Einbindung in bestehende Verfahren möglich sein.

Ferner ist es eine Aufgabe der vorliegenden Erfindung, ein Motorsteuergerät und auch eine Verbrennungskraftmaschine mit einem derartigen Motorsteuergerät bereitzustellen, welches in der Lage ist, eine Zylinderluftfüllung in zuverlässiger und hinreichend genauer Weise unter verträglichem Zeit- und Kostenaufwand auch unter Berücksichtigung eines unbefeuerten Betriebs des Zylinders zu bestimmen.

Diese Aufgabe wird erfindungsgemäß gelöst durch ein Verfahren mit den Merkmalen des Patentanspruchs 1.

Die Erfindung betrifft ein Verfahren zur Bestimmung der Zylinderluftfüllung eines Verbrennungsmotors im unbefeuerten Betrieb, wobei ein Verfahren zur Bestimmung der Zylinderluft-füllung im befeuerten Betrieb durchgeführt wird. Erfindungsgemäß ist vorgesehen, dass in dem Verfahren zur Bestimmung der Zylinderluftfüllung im befeuerten Betrieb ein Korrekturfaktor in Abhängigkeit von Motordrehzahl und Motorlast vorgesehen wird, der den durch das Verfahren im befeuerten Betrieb ermittelten Wert für die Zylinderluftfüllung entsprechend für den unbefeuerten Betrieb anpasst.

Unter dem Begriff der Zylinderluftfüllung wird im Sinn der vorliegenden Erfindung insbesondere die im Zylinder befindliche Luftmenge (insbesondere Luftmasse, Anzahl von Luftteilchen oder ähnliches, Sauerstoffmenge, Sauerstoffmasse bzw. Anzahl von Sauerstoffteilchen) verstanden.

Gemäß der vorliegenden Erfindung wird zunächst ein Wert für die Zylinderluftfüllung mit einem Verfahren bestimmt, das einen Zylinder im befeuerten Betrieb voraussetzt. Es sind viele solcher Verfahren zur Bestimmung der Zylinderluftfüllung eines Zylinders im befeuerten Betrieb bekannt. Konventionell kann die Zylinderluftfüllung in der Regel aus einem gemessenen oder modellierten Saugrohrdruck (auch Ladedruck genannt, welcher dem Druck der dem Zylinder zugeführten Luft entspricht), Abgasgegendruck (auch Abgasdruck genannt, welcher den Druck des Abgases in einem Abgasrohr repräsentiert) und Modellen für einen Restgasanteil im Zylinder berechnet werden.

Es gibt Berechnungsalgorithmen, bei denen auch die aktuellen Positionen von füllungsbeeinflussenden Aktuatoren (z. B. Einlass- und Auslassnockenwellen, Ladungsbewegungsklappen, Ventilhübe und anderes) eingehen, sowie Ansaugluft- und Abgastemperaturen. Ungenauigkeiten der Modelle können dadurch korrigiert werden, dass anhand von Motor-Prüfstandsmessungen Korrekturfelder der entsprechenden Motorsteuersoftware bedatet werden. Auch Umgebungsfaktoren wie Druck und Temperatur können Einfluss auf die tatsächliche und die berechnete Zylinderluftfüllung haben. Umgebungsfaktoren wie Druck und Temperatur können beispielsweise auch durch ein Modell-basiertes Verfahren, z.B. wie es in der DE 10 2015 210 761 A1 beschrieben ist, berücksichtigt werden.

Weitere Beispiele für geeignete Verfahren zur Bestimmung der Zylinderluftfüllung im befeuerten Betrieb werden in der nachfolgenden detaillierten Figurenbeschreibung näher erläutert.

Erfindungsgemäß ist vorgesehen, dass der aus dem Verfahren zur Bestimmung der Zylinderluftfüllung ermittelte Wert mit einem Korrekturfaktor multipliziert wird, der in Abhängigkeit von der Motordrehzahl und der Motorlast den durch das Verfahren im befeuerten Betrieb ermittelten Wert für die Zylinderluftfüllung für den unbefeuerten Betrieb anpasst.

Es wird als Kennwert für die Motorlast der Saugrohrdruck eingesetzt.

Ausgedrückt in einer Formel ergibt sich für den erfindungsgemäßen Anpassungsschritt:

$$mLunbef = mLbef \cdot Fkorr\ (Mn, p2)$$

mit

**mLunbef:** Luftmenge bei unbefeuertem Zylinder
mLbef: Luftmenge bei befeuertem Zylinder
p2: Saugrohrdruck
Mn: Motordrehzahl
Fkorr (Mn, p2): Korrekturfaktor in Abhängigkeit der Motordrehzal Mn und des Saugrohrdrucks p2.

Es konnte durch Untersuchungen der Anmelderin gezeigt werden, dass der unbefeuerte Betrieb einen starken Einfluss durch das Druckgefälle über das Einlassventil verzeichnen lässt. Der Zustand "Zylinderdruck > Saugrohrdruck" nach der Verbrennung bleibt aufgrund fehlender Verbrennung im unbefeuerten Betrieb aus. In der Folge kann der Motor Abgas aus dem Abgasstrang zurück in den Zylinder ziehen. Der Zylinder kann damit komplett mit Restgas gefüllt werden, welches wieder ausgeschoben werden kann. Es konnten vergleichsweise hohe Druckamplituden bei dem Wert für den Abgasdruck p3 im unbefeuerten Betrieb festgestellt werden. Da nicht ausreichend Abgas durch das schließende Auslassventil ausgeschoben werden kann, kann im unbefeuerten Betrieb auch der Zylinderdruck gegen Ende des Ausschiebens ansteigen, was schließlich zur Folge haben kann, dass der Zylinder im nachfolgenden Schritt einen geringeren Luftbedarf hat. Diese Einflüsse auf die Bestimmung der Zylinderluftfüllung können nunmehr mit dem erfindungsgemäßen Verfahren berücksichtigt werden, und dies auf eine sehr effiziente Weise eingebunden in die bisher schon durchgeführte Luftbefüllungsberechnungsalgorithmik für den befeuerten Betrieb des Zylinders.

Das Verfahren kann z. B. in einem Motorsteuergerät der Verbrennungskraftmaschine durchgeführt werden, insbesondere in einem (Software)-Modul des Motorsteuergeräts. Das Verfahren kann als ein Computer-implementiertes Verfahren ausgebildet sein. Das Verfahren kann z. B. zum Ablaufen in das Motorsteuergerät einprogrammiert werden. Dazu kann das Motorsteuergerät auf einen Speicher zugreifen, welcher Anweisungen enthält, welche ausgebildet sind, das Verfahren zur Bestimmung der Zylinderluftfüllung bei befeuertem und unbefeuertem Betrieb durchzuführen.

Die Einbindung des Korrekturfaktors in das Verfahren zur Bestimmung der Zylinderluftfüllung im befeuerten Betrieb kann in Abhängigkeit von der Stellung eines Schalters oder eines entsprechenden Bits erfolgen.

In einer bevorzugten Ausführungsform der Erfindung wird beim Umschalten zwischen befeuertem Betrieb und unbefeuertem Betrieb eine beispielsweise Integrator-gesteuerte Verrampung des Korrekturfaktors vorgenommen. Die Verrampung zwischen befeuertem und unbefeuertem Betrieb erfolgt insbesondere linear. Die Geschwindigkeit der Verrampung kann über Parameter gesteuert werden. Es kann auch eine Verrampung über eine Kennlinie oder Geradengleichung dargestellt werden.

Der Saugrohrdruck (auch Ladedruck genannt) und/oder der Abgasdruck kann durch Messung mittels geeigneter Sensoren ermittelt worden sein oder teilweise auch durch Modellieren bestimmt worden sein.

Der Saugrohrdruck und der Abgasdruck können neben der Motordrehzahl Eingabegrößen für das erfindungsgemäße Verfahren darstellen.

Die Luftfüllungsberechnungsalgorithmik kann sowohl im Hinblick auf die Durchführung des Verfahrens zu Bestimmung der Zylinderluftfüllung im befeuerten Betrieb als auch im unbefeuerten Betrieb in einem herkömmlichen Motorsteuergerät durchführbar sein.

Die Luftfüllungsberechnungsalgorithmik kann aus physikalisch/heuristischen Modellen unter Zuhilfenahme von Kennlinien und unter Verwendung von experimentell bestimmten Daten erstellt worden sein.

Die Luftfüllungsberechnungsalgorithmik des Verfahrens kann eine oder mehrere weitere Eingangsgrößen aufweisen: Positionen von füllungsbeeinflussenden Aktuatoren, eine Drehzahl des Verbrennungsmotors, eine Einlassnockenposition, eine Auslassnockenposition, eine Ladungsbewegungsklappenposition, mindestens einen Ventilhub, eine Abgastemperatur, eine Luftzufuhrtemperatur, einen gemessenen oder modellierten Abgasdruck stromabwärts einer Turbine und/oder eine Umgebungstemperatur.

Als ein Ergebnis kann die Luftfüllungsberechnungsalgorithmik, bei Eingabe eines Saugrohrdrucks und eines Abgasdrucks, eine Luftmenge ergeben, welche bei Vorliegen des befeuerten Betriebs innerhalb des Zylinders enthalten wäre. Wird für einen oder mehrere Zylinder ein unbefeuerter Betrieb festgestellt, beispielsweise im Schubbetrieb des Verbrennungsmotors oder bei Zylinderabschaltung bei geringer Last, wird die so ermittelte Luftmenge um den Korrekturfaktor angepasst, der bei der anliegenden Motordrehzahl und dem aktuellen Saugrohrdruck als Kennwert hinterlegt oder berechnet worden ist. Damit ist die zu diesem Zeitpunkt im Zylinder befindliche Luftmenge wesentlich genauer ermittelt und kann für die folgenden Steuerungsprozesse herangezogen werden. Hierdurch kann eine Verbesserung der Effizienz des nachfolgend wieder aufgenommenen befeuerten Betriebs des Zylinders erreicht werden. In der Folge wird jedoch auch eine verbesserte Effizienz der Abgasreinigung erzielt, da die nunmehr genaueren Werte auch dazu beitragen können, die Temperaturen, Durchflussmengen, Beladungskapazitäten der Katalysatorelemente und weitere Faktoren der Abgasreinigung genauer erfassen und steuern zu können.

Es ist hierbei sehr vorteilhaft, dass nicht eine weitere unabhängige Steuerungs- und Luftmengenfeststellalgorithmik benötigt wird, sondern dass das erfindungsgemäße Verfahren auf der Basis und unter Verwendung der vorhandenen Daten und Messeinrichtungen arbeiten kann.

Gegenstand der vorliegenden Erfindung ist ferner ein Verfahren zum Steuern einer Verbrennungskraftmaschine mit mindestens einem Zylinder, wobei das Verfahren folgende Schritte aufweist:

- Durchführen eines Verfahrens zur Bestimmung einer Zylinderluftfüllung im befeuerten Betrieb,
- Feststellen ob mindestens ein Zylinder in einen unbefeuerten Betrieb wechselt, Einbinden eines Korrekturfaktors, welcher in Abhängigkeit der Motordrehzahl und der Motorlast ermittelt wird, und
- Einbringen des korrigierten Wertes für die Zylinderluft-füllung in die weiteren Schritte der Motorsteuerung.

Das Verfahren kann auch wahlweise eine Restgasrückführung unterstützen.

Es kann ein Anpassen der Menge der zuzuführenden Frischluft und/oder der Menge der in den Zylinder rückströmenden Abgase erfolgen als Beispiele für weitere Schritte der Motorsteuerung.

Ein erfindungsgemäßes Motorsteuergerät weist ein Eingabemodul und einen Prozessor (z.B. Hardware und/oder Software umfassend) auf. Das Eingabemodul ist ausgebildet, zumindest einen Saugrohrdruck und einen Abgasdruck eines Zylinders einer Verbrennungskraftmaschine und die Motordrehzahl zu erhalten bzw. innerhalb des Motorsteuergeräts verfügbar zu machen. Der Prozessor ist ausgebildet, eine Luftbefüllungsberechnungsalgorithmik durchzuführen, welcher die Zylinderluftfüllung im befeuerten Betrieb ermittelt. Der Prozessor ist ferner ausgebildet, die Zylinderluftfüllung in Abhängigkeit von der Motordrehzahl und der Motorlast, bevorzugt ermittelt durch den Saugrohrdruck, zu korrigieren, um eine Zylinderluft-füllung für den unbefeuerten Betrieb ermitteln zu können. Schließlich ist der Prozessor ausgebildet, eine in den Zylinder einzuführende Kraftstoffmenge und/oder Frischluftmenge bei Wiederaufnahme des befeuerten Betriebs basierend auf der bestimmten Luftmenge zu bestimmen (insbesondere basierend auf einer Sauerstoffmenge der bestimmten Luftmenge zu bestimmen).

Das Motorsteuergerät kann ausgebildet sein, ein Verfahren gemäß einer der vorangehenden Ausführungsformen auszuführen oder zu steuern.

Eine erfindungsgemäße Verbrennungskraftmaschine (z.B. Ottomotor, Benzinmotor, Dieselmotor oder Erdgasmotor und optional einen zusätzlichen Elektromotor umfassend) umfasst mindestens einen Zylinder mit einem Saugrohr und einem Abgasrohr und ein Motorsteuergerät gemäß einer der angegebenen Ausführungsformen. Dabei ist das Motorgerät ausgebildet, eine Luftmenge im Zylinder zu bestimmen, und basierend darauf eine Kraftstoffmenge und/oder Frischluftmenge zu bestimmen, welche schließlich zur Verbrennung bei Wiederaufnahme des befeuerten Betriebs zusammen mit der Luftmenge in den Zylinder einzuführen ist. Das Motorsteuergerät kann dazu z.B. eine Kraftstoffpumpe und ein Einlassventil steuern.

Die Erfindung schließt auch ein Computerprogrammprodukt mit einem Programmcode, der auf einem von einem Computer lesbaren Medium gespeichert ist, zur Durchführung der vorstehend als erfindungsgemäß beschriebenen Verfahren ein.

Es gibt eine Vielzahl von Möglichkeiten, das Verfahren auszugestalten und weiterzubilden. Hierfür darf zunächst auf die dem Patentanspruch 1 nachgeordneten Patentansprüche verwiesen werden. Im Folgenden darf eine bevorzugte Ausgestaltung der Erfindung anhand der Zeichnungen und den dazugehörigen Beschreibungen näher erläutert werden. In der Zeichnung zeigt:

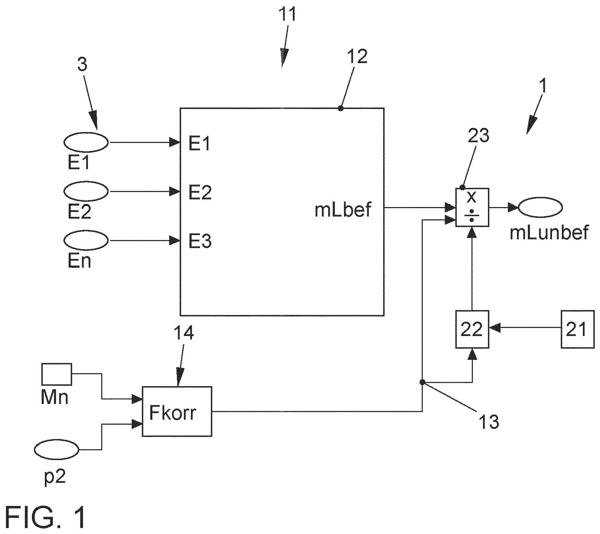

**Fig. 1** in einer stark schematisierten Darstellung ein Ablaufdiagramm für den Korrekturschritt der Zylinderluftfüllung in einer bevorzugten Ausgestaltung der Erfindung.

In Figur 1 ist eine schematisierte Darstellung eines Ablaufdiagramms für den Korrekturschritt bei der Bestimmung der Zylinderluftfüllung in einer bevorzugten Ausgestaltung der Erfindung gezeigt.

Ausführungsformen der vorliegenden Erfindung sind auf ein Verfahren und eine Vorrichtung, insbesondere ein Motorsteuergerät, gerichtet, welche eine Zylinderluftfüllung bzw. eine Luftmenge innerhalb eines Zylinders zu bestimmen in der Lage sind. Die folgenden Gleichungen Gl.1 bis Gl.7 beschreiben physikalische Größen, welche zur Bestimmung der Luftmenge innerhalb des Zylinders im befeuerten Betrieb von Bedeutung sind.

$$\text{Gl.1:} \quad mRG_{res} = \frac{p_3 * V_{AS}}{R_a * T_3}$$

$$\text{GI.2:} \quad mRG_{\text{Reasp}} = C * A * p_3 * \sqrt{\frac{1}{T_3} * \psi\left(\frac{p_2}{p_3}\right)}$$

$$\text{GI.3:} \quad mLSca = C * A * p_2 * \sqrt{\frac{1}{T_2} * \psi\left(\frac{p_3}{p_2}\right)}$$

$$\text{GI.4:} \quad p_{RG} = \frac{(mRG_{Res} + mRG_{Reasp} - mLsca) * T_{zyl}}{R_a * V_{ES}}$$

$$\text{GI.5:} \quad p_{zyl} = p2$$

$$\text{GI.6:} \quad p_L = p_{zyl} - p_{RG}$$

$$\text{GI.7:} \quad mL = \frac{p_L * V_{ES}}{R_a * T_{zyl}}$$

Dabei haben die in den Gleichungen Gl.1 bis Gl.7 vorkommenden Variablen die folgende Bedeutung:

mRGres: Residuales Restgas

mRGreasp: Reaspiratives Restgas

p2: Saugrohrdruck

mLsca: Scavenging Luftmasse

p3: Abgasdruck

T2: Temperatur Saugrohr

T3: Temperatur Abgas

pzyl: Zylinderdruck bei Einlassventil schließt

Tzyl: Temperatur Zylinder bei Einlassventil schließt

pRG: Partialdruck Restgas

pL: Partialdruck Luft

VAS: Zylindervolumen bei Auslassventil schließt

VES: Zylindervolumen bei Einlassventil schließt

Ra: Spezifische Gaskonstante

A: Effektive Fläche Ventilüberströmung

C: Konstante

mL: Luftmasse im Zylinder

pu: Umgebungsdruck

Gl.1 beschreibt die Restgasmenge als Funktion im Wesentlichen des Abgasdruckes p3. Die korrekte Erfassung der Restgasmenge ist Voraussetzung für eine exakte Bestimmung der Zylinderluftfüllung; sie ist herkömmlicherweise aber einer direkten Messung durch eine Sensorik nicht zugänglich.

Das im Totvolumen verbleibende Restgas lässt sich aus dem entsprechenden Zylindervolumen VAS, dem Abgasgegendruck p3 und der Abgastemperatur T3 gemäß Gl.1 berechnen. Bei dem im ottomotorischen Bereich gängigen Verfahren der internen Restgasrückführung bzw. Spülung der Restgasmenge durch Frischluft (Scavenging) fließt im oberen Totpunkt des Ansaugtrakts während der Überschneidungsphase der Öffnungszeiten von Einlass und Auslassventil Restgas, bzw. Frischluft, zwischen Saugrohr- und Abgasvolumen durch den Zylinder. Die Menge des übergeströmten Restgases, das im weiteren Verlauf des Ansaugtrakts wieder in den Zylinder zurückgeholt wird, hängt im Wesentlichen vom Druckverhältnis zwischen Abgasdruck p3 und dem Saugrohrdruck p2 gemäß Gl.2 ab.

Analog gilt dies für die durch den Zylinder gespülte Frischluftmenge bei positivem Druckgefälle zwischen Saugrohrdruck und Abgasdruck (siehe Gl.3). Es lässt sich zeigen (Gl.4 bis Gl. 7), dass bei einheitlicher Skalierung von Saugrohrdruck p2 und Abgasgegendruck p3 auch die Zylinderluftfüllung mL im gleichen Ausmaß linear skaliert.

Werden z. B. Gl.1 bis Gl.7 statt in p2, p3 in p2' = f·p2 und p3' = s·p3 angeschrieben, so ergibt sich Gl. 7 zu: mL' = f·mL. Somit skaliert die sich im Zylinder befindliche Luftmenge bei geschlossenem Einlassventil genauso wie der Saugrohrdruck p2 und der Abgasdruck p3.

Gl.1 beschreibt hier die Menge des Restgases bei geschlossenem Auslassventil. In Gl.2 und Gl.3 bezeichnet $\psi$ die Drosselausflussfunktion, welche gegeben ist als sqrt(k/(k - 1)·(x2/k - xk+1/k), wobei k der Adiabatenexponent ist. Gl. 5 geht von einer Näherung aus, dass bei Schließen des Einlassventils ein Druckgleichgewicht zwischen dem Druck im Saugrohr und dem Druck im Zylinder vorliegt.

Der Umstand, dass Saugrohrdruck, Abgasgegendruck und Zylinderluftfüllung in gleicher Weise linear skalieren, ist nicht zwingend Grundlage eines Verfahrens zur Bestimmung einer Luftmenge innerhalb eines Zylinders einer Verbrennungskraftmaschine im befeuerten Betrieb.

Weitere Verfahren zur Bestimmung der Zylinderluftfüllung im befeuerten Betrieb sind beispielsweise auch aus DE 101 58 262 A1, EP 2 098 710 B1 oder aus DE 103 62 028 B4 mittelbar oder unmittelbar bekannt.

Fig. 1 zeigt in schematischer Darstellung ein Modul 1, welches ausgebildet ist, ein Verfahren zum Bestimmen einer Luftmenge innerhalb eines Zylinders gemäß einer Ausführungsform der vorliegenden Erfindung auszuführen, und welches z. B. in einem Motorsteuergerät gemäß einer Ausführungsform der vorliegenden Erfindung umfasst sein kann.

Das Modul 1 umfasst ein Eingabemodul 3, welches ausgebildet ist, zumindest einen Saugrohrdruck p2 und die Motordrehzahl Mn sowie weitere für die Modellierung der Zylinderluftfüllung im befeuerten Betrieb mLbef wesentlichen Parameter zu erhalten.

Weitere Eingangsgrößen sind durch E1, E2 und En bezeichnet und können z.B. den Abgasdruck p3, eine Einlassnockenposition und eine Auslassnockenposition oder auch andere Eingangsgrößen wie Saugrohrtemperatur und Abgastemperatur umfassen.

Ferner umfasst das Modul 1 einen Prozessor 11, welcher ausgebildet ist, die Zylinderluftfüllung bei befeuertem Betrieb mLbef aus den verschiedenen Eingangsgrößen anhand der Luftbefüllungsberechnungsalgorithmik 12 zu bestimmen.

Mittels eines Berechnungselements 14 wird ausgehend von den Eingangswerten der Motordrehzahl Mn und dem Saugrohrdruck p2 ein Korrekturfaktor Fkorr berechnet. Erfindungsgemäß ist nun vorgesehen, dass bei Erkennen 13 eines unbefeuerten Betriebs eines Zylinders der durch die Luftbefüllungsberechnungsalgorithmik 12 bestimmte Wert mLbef durch Einbeziehung des Korrekturfaktors Fkorr, z.B. durch Multiplikation oder Division der beiden Werte 23, an den festgestellten unbefeuerten Zustand des Zylinders angepasst wird und der korrigierte Wert mLunbef bestimmt wird.

In einer bevorzugten Ausgestaltung wird in einem Bit 21 abgefragt, ob ein Übergang von einem unbefeuerten in einen befeuerten Betrieb des Zylinders vorliegt. Vor dem Hintergrund, dass festgestellt werden konnte, dass es zu Unstetigkeiten beim Umschalten zwischen den beiden Betriebsmodi kommt, kann beim Feststellen eines solchen Übergangs eine Integrator-gesteuerte Verrampung 22 des Korrekturfaktors Fkorr vorgenommen werden, bevor er bei der Berechnung des Wertes mLunbef im Operationsschritt 23 eingesetzt wird. Auf diese Weise kann erreicht werden, dass die Unstetigkeit beim Umschalten von einem befeuerten in einen unbefeuerten Betrieb oder umgekehrt von einem unbefeuerten Betrieb in einen befeuerten Betrieb vermieden oder zumindest vermindert wird.

**Bezugszeichenliste**

1 Modul
3 Eingabemodul

11 Prozessor
12 Luftbefüllungsberechnungsalgorithimik
13 Abfrage
14 Berechnungselement
21 Bit
22 Operationsschritt
23 Operationsschritt
E1, E2, E3, En Eingangsgrößen
Mn Motordrehzahl
p2 Saugrohrdruck
Fkorr Korrekturfaktor
mLbef Zylinderluftfüllung im befeuerten Betrieb
mLunbef Zylinderluftfüllung im unbefeuerten Betrieb

**Patentansprüche**

1.  Verfahren zur Bestimmung der Zylinderluftfüllung eines Verbrennungsmotors im unbefeuerten Betrieb, wobei ein Verfahren zur Bestimmung der Zylinderluftfüllung im befeuerten Betrieb durchgeführt wird, wobei in dem Verfahren zur Bestimmung der Zylinderluftfüllung im befeuerten Betrieb ein Korrekturfaktor in Abhängigkeit von Motordrehzahl und Motorlast vorgesehen wird, wobei als Kennwert für die Motorlast der Saugrohrdruck (p2) angesetzt wird, wobei der Korrekturfaktor den durch das Verfahren im befeuerten Betrieb ermittelten Wert für die Zylinderluftfüllung für den unbefeuerten Betrieb anpasst, wobei beim Umschalten von dem befeuerten in den unbefeuerten Betrieb eine Verrampung des Korrekturfaktors vorgenommen wird, **dadurch gekennzeichnet, dass** der aus dem Verfahren zur Bestimmung der Zylinderluftfüllung ermittelte Wert mit dem Korrekturfaktor wie folgt multipliziert wird:

$$mLunbef = mLbef \cdot Fkorr (Mn, p2)$$

    mit

    mLunbef: Luftmenge bei unbefeuertem Zylinder,
    mLbef: Luftmenge bei befeuertem Zylinder,
    p2: Saugrohrdruck,
    Mn: Motordrehzahl,
    Fkorr (Mn, p2): Korrekturfaktor in Abhängigkeit der Motordrehzal Mn
    und des Saugrohrdrucks p2.

2.  Verfahren gemäß Anspruch 1 , **dadurch gekennzeichnet, dass** die Einbindung des Korrekturfaktors in das Verfahren zur Bestimmung der Zylinderluftfüllung im befeuerten Betrieb in Abhängigkeit von der Stellung eines Schalters oder eines entsprechenden Bits (21) erfolgt.

3.  Verfahren gemäß einem der vorstehenden Ansprüche, **dadurch gekennzeichnet, dass** eine Luftfüllungsberechnungsalgorithmik des Verfahrens gemäß einem der vorstehenden Ansprüche eine oder mehrere weitere Eingangsgrößen aufweist: Positionen von füllungsbeeinflussenden Aktuatoren, eine Drehzahl des Verbrennungsmotors, eine Einlassnockenposition, eine Auslassnockenposition, eine Ladungsbewegungsklappenposition, mindestens einen Ventilhub, eine Abgastemperatur, eine Luftzufuhrtemperatur, einen gemessenen oder modellierten Abgasdruck stromabwärts einer Turbine und/oder eine Umgebungstemperatur.

4.  Verfahren gemäß einem der vorstehenden Ansprüche, **dadurch gekennzeichnet, dass** das Verfahren Restgasrückführung unterstützt.

5.  Verfahren gemäß einem der vorstehenden Ansprüche 3 oder 4, **dadurch gekennzeichnet, dass** der Saugrohrdruck (p2) und der Abgasdruck (p3) jeweils mittels Druckmessungen oder Modellierungen, insbesondere mittels Mittelung von Druckmessungen oder Modellierungen, in einem Saugrohr bzw. in einem Abgasrohr bestimmt werden.

6.  Verfahren zum Steuern einer Verbrennungskraftmaschine mit mindestens einem Zylinder, mit dem Verfahren zur Bestimmung der Zylinderluftfüllung des Verbrennungsmotors im unbefeuerten Betrieb nach einem der Ansprüche 1 bis 5, wobei das Verfahren aufweist:
Durchführen des Verfahrens zur Bestimmung der Zylinderluftfüllung im befeuerten Betrieb, Feststellen ob mindestens ein Zylinder in einen unbefeuerten Betrieb wechselt, Einbinden des Korrekturfaktors, welcher in Abhängigkeit der Motordrehzahl und der Motorlast ermittelt wird, und Einbringen des korrigierten Wertes für die Zylinderluftfüllung in die weiteren Schritte der Motorsteuerung.

7. Verfahren gemäß Anspruch 6, **dadurch gekennzeichnet, dass** ein Anpassen der Menge der zuzuführenden Frischluft und/oder der Menge der in den Zylinder rückströmenden Abgase erfolgt.

8. Motorsteuergerät, welches ausgebildet ist, das Verfahren nach einem der vorhergehenden Ansprüche auszuführen.

9. Computerprogrammprodukt mit einem Programmcode, der auf einem von einem Computer lesbaren Medium gespeichert ist und der, wenn dieser von einem Motorsteuergerät nach Anspruch 8 geladen und ausgeführt wird, ein Verfahren gemäß einem der Ansprüche 1 bis 7 durchführt.

10. Verbrennungskraftmaschine, welche das Motorsteuergerät gemäß Anspruch 8 aufweist.


**Claims**

1. Method for determining the cylinder air charge of an internal combustion engine in unfired operation, a method for determining the cylinder air charge in fired operation being carried out, in the method for determining the cylinder air charge in fired operation, a correction factor being provided as a function of engine speed and engine load, the intake manifold pressure (p2) being used as the characteristic value for the engine load, the correction factor adapting the value for the cylinder air charge determined by the method in fired operation for the unfired operation, an amplification of the correction factor being carried out when switching from fired to unfired operation, **characterized in that** the value determined from the method for determining the cylinder air charge is multiplied by the correction factor as follows:

$$mLunbef = mLbef \cdot Fkorr\,(Mn,\ p2)$$

where

mLunbef: air quantity with unfired cylinder,
mLbef: air quantity with fired cylinder,
p2: intake manifold pressure,
Mn: engine speed,
Fkorr (Mn, p2): correction factor as a function of the engine speed Mn and the intake manifold pressure p2.

2. Method according to claim 1, **characterized in that** the correction factor is incorporated into the method for determining the cylinder air charge in fired operation on the basis of the position of a switch or a corresponding bit (21).

3. Method according to either of the preceding claims, **characterized in that** an air charge calculation algorithm of the method according to either of the preceding claims has one or more further input variables: positions of charge-influencing actuators, a speed of the internal combustion engine, an intake cam position, an exhaust cam position, a charge movement flap position, at least one valve lift, an exhaust gas temperature, an air supply temperature, a measured or modeled exhaust gas pressure downstream of a turbine and/or an ambient temperature.

4. Method according to any of the preceding claims, **characterized in that** the method assists in residual gas recirculation.

5. Method according to either of the preceding claims 3 or 4 ,
**characterized in that** the intake manifold pressure (p2) and the exhaust gas pressure (p3) are each determined by means of pressure measurements or modeling, in particular by means of averaging pressure measurements or modeling, in an intake manifold or in an exhaust pipe.

6. Method for controlling an internal combustion engine having at least one cylinder, with the method for determining the cylinder air charge of the internal combustion engine in unfired operation according to any of claims 1 to 5, wherein the method comprises:
carrying out the method for determining the cylinder air charge in fired operation, determining whether at least one cylinder switches to unfired operation, incorporating the correction factor, which is determined as a function of the engine speed and the engine load, and incorporating the corrected value for the cylinder air charge into the further steps of the engine control.

7. Method according to claim 6, **characterized in that** the amount of fresh air to be supplied and/or the amount of exhaust gases flowing back into the cylinder is adjusted.

8. Engine control unit which is designed to carry out the method according to any of the preceding claims.

9. Computer program product comprising a program code stored on a computer-readable medium which, when loaded and executed by an engine control unit according to claim 8, carries out a method according to any of claims 1 to 7.

10. Internal combustion engine comprising the engine control unit according to claim 8.


**Revendications**

1. Procédé de détermination du remplissage d'air des cylindres d'un moteur à combustion interne en mode non allumé, dans lequel un procédé de détermination du remplissage d'air des cylindres en mode allumé est réalisé, dans lequel un facteur de correction est prévu dans le procédé de détermination du remplissage d'air des cylindres en mode allumé en fonction du régime moteur et de la charge du moteur, dans lequel la pression de tubulure d'aspiration (p2) est prise comme valeur caractéristique pour la charge du moteur, dans lequel le facteur de correction adapte la valeur déterminée par le procédé en mode allumé pour le remplissage d'air des cylindres pour le mode non allumé, dans lequel un rétrécissement du facteur de correction est mis en place lors du passage du mode allumé au mode non allumé, **caractérisé en ce que** la valeur déterminée par le procédé de détermination du remplissage d'air des cylindres est multipliée par le facteur de correction comme suit :

$$mLunbef = mLbef \cdot Fkorr\ (Mn, p2)$$

avec

mLunbef : volume d'air lorsque le cylindre n'est pas allumé,
mLbef : volume d'air lorsque le cylindre est allumé,
p2 : pression de tubulure d'aspiration,
Mn : régime moteur,
Fkorr (Mn, p2) : facteur de correction en fonction du régime moteur Mn et de la pression de tubulure d'aspiration p2.

2. Procédé selon la revendication 1, **caractérisé en ce que** l'intégration du facteur de correction dans le procédé de détermination du remplissage d'air des cylindres en mode allumé est effectuée en fonction de la position d'un commutateur ou d'un bit correspondant (21).

3. Procédé selon l'une des revendications précédentes,
**caractérisé en ce qu'un** algorithme de calcul de remplissage d'air du procédé selon l'une des revendications précédentes présente une ou plusieurs autres grandeurs d'entrée : des positions d'actionneurs ayant une influence sur le remplissage, un régime du moteur à combustion interne, une position de came d'admission, une position de came d'échappement, une position de volet de turbulence, au moins une course de soupape, une température de gaz d'échappement, une température d'admission d'air, une pression de gaz d'échappement mesurée ou modélisée en aval d'une turbine et/ou une température ambiante.

4. Procédé selon l'une des revendications précédentes,
**caractérisé en ce que** le procédé prend en charge le recyclage des gaz résiduels.

**5.** Procédé selon l'une des revendications 3 ou 4 précédentes,
**caractérisé en ce que** la pression de tubulure d'aspiration (p2) et la pression de gaz d'échappement (p3) sont déterminées respectivement par le biais de mesures de pression ou de modélisations, en particulier par le biais d'une moyenne de mesures de pression ou de modélisations, dans une tubulure d'aspiration et dans une tubulure de gaz d'échappement.

**6.** Procédé de commande d'un moteur à combustion interne comportant au moins un cylindre, avec le procédé de détermination du remplissage d'air des cylindres du moteur à combustion interne en mode non allumé selon l'une des revendications 1 à 5, dans lequel le procédé présente :
la réalisation du procédé de détermination du remplissage d'air des cylindres en mode allumé, l'établissement de si au moins un cylindre passe en mode non allumé, l'intégration du facteur de correction qui est déterminé en fonction du régime moteur et de la charge du moteur, et l'introduction de la valeur corrigée pour le remplissage d'air des cylindres dans les étapes suivantes de la commande de moteur.

**7.** Procédé selon la revendication 6, **caractérisé en ce qu'une** adaptation de la quantité d'air frais à fournir et/ou de la quantité de gaz d'échappement retournant dans le cylindre est effectuée.

**8.** Appareil de commande de moteur qui est conçu pour mettre en œuvre le procédé selon l'une des revendications précédentes.

**9.** Produit programme d'ordinateur comportant un code de programme qui est stocké sur un support lisible par un ordinateur et qui, lorsqu'il est chargé et mis en œuvre par un appareil de commande de moteur selon la revendication 8, réalise un procédé selon l'une des revendications 1 à 7.

**10.** Moteur à combustion interne qui présente l'appareil de commande de moteur selon la revendication 8.

FIG. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10158262 A1
- DE 10362028 B4
- EP 2098710 B1
- EP 3282114 A1
- DE 102015210761 A1